# EUROPÄISCHE PATENTANMELDUNG

(11) **EP 0 952 704 A2**
(43) Veröffentlichungstag der Anmeldung: **27.10.1999**
(21) Anmeldenummer: 99106076.5
(22) Anmeldetag: 26.03.1999
(51) Int. Cl.: H04L 12/40, B60R 16/02

(54) **Elektronisches, datenbusfähiges Fahrzeugsteuergerät**

(30) Priorität: 08.04.1998 DE 19815715
(71) Anmelder: DaimlerChrysler AG, 70567 Stuttgart (DE)
(72) Erfinder: Huber, Martin, 70806 Kornwestheim (DE); Kuder, Helmar, 73257 Köngen (DE); Kühner, Thilo, 71686 Remseck (DE); Lohrmann, Peter, 73054 Eislingen (DE); Minuth, Jürgen, 73079 Suessen (DE); Preuschoff, Werner, 73765 Neuhausen (DE); Säufferer, Bernd, 73278 Schlierbach (DE); Seefried, Volker, 73117 Wangen (DE)

(57) **Zusammenfassung**

Die Erfindung bezieht sich auf ein elektronisches Fahrzeugsteuergerät mit einer Prozessoreinheit und einer Kommunikationsendstufe, über die das Steuergerät an einen Datenbus ankoppelbar ist.

Erfindungsgemäß ist ein zwischen die Prozessoreinheit und die Kommunikationsendstufe geschaltetes, ansteuerbares Datenprotokollgerät vorgesehen, welches das für einen jeweiligen Datentransfer zu benutzende Datenprotokoll in Abhängigkeit von eingangsseitig zugeführten Protokollsteuerungsinformationen variabel festlegt. Das Datenprotokollgerät ist in Hardware oder Software realisierbar und erlaubt eine flexible Datenprotokollwahl auch am Ende der Steuergerätentwicklung.

Verwendung z.B. in Automobilen.

## Beschreibung

Die Erfindung bezieht sich auf ein elektronisches Fahrzeugsteuergerät mit einer Prozessoreinheit und einer Kommunikationsendstufe, über die das Steuergerät an einen Datenbus ankoppelbar ist. Derartige Steuergeräte finden insbesondere in modernen Automobilen mit datenvernetzter Fahrzeugelektronik Verwendung. Hierbei sind die verschiedenen, im Automobil eingesetzten elektronischen Steuergeräte an einen Datenbus, meist in Form des sogenannten CAN-Buses, zwecks Datenkommunikation untereinander sowie gegebenenfalls mit peripheren Einheiten angeschlossen. Der Datenaustausch erfolgt, wie für elektronische Datenverarbeitung üblich, unter Verwendung geeigneter Protokolle für die Daten, worunter auf diesem Fachgebiet die Art und Weise zu verstehen ist, in welcher zeitlichen Folge Dateninformationen transferiert werden. Das jeweilige Steuergerät tauscht Daten unterschiedlichen Typs über Meßwerte, Schalterstellungen etc. mit den anderen Steuergeräten über Kommunikationsverbindungen mit einem jeweils zugehörigen Datenprotokoll aus. Daneben kommuniziert es je nach Bedarf mit anderen Komponenten, wie Sensoren, Aktoren, Anzeigeelementen und Schnittstellen zu anderen Kommunikationskanälen, wie Mobilfunk etc. Daher besteht die Anforderung, eine Mehrzahl unterschiedlicher Protokolle im Steuergerät zur Verfügung zu haben.

Herkömmlicherweise sind im Fahrzeugsteuergerat zur Erfüllung dieser Anforderung eine entsprechende Menge unterschiedlicher, vordefinierter Protokolle fest implementiert. Dazu werden die Protokolle für das jeweilige Steuergerät während der Designphase des zugehörigen datenvernetzten Systems hinsichtlich ihres zeitlichen Verhaltens und ihrer Darstellung auf dem Datenbus, d.h. hinsichtlich Datenkennzeichnung und Datenrepräsentation, in der gewünschten Weise parameterisiert. Nach der so erfolgten Festlegung sind die Steuergeräte hinsichtlich ihrer Protokolle zum Austausch von Daten von außen nicht mehr veränderbar. Alle gewünschten Funktionalitäten des Steuergerätes müssen daher herkömmlicherweise in einer frühen Entwicklungs-Phase festgelegt werden. Jegliche Änderung der Funktionalität, die von einer Änderung der Protokolle für den Datenaustausch begleitet ist, in einer späten Entwicklungs-Phase eines Steuergerätes oder nach Abschluß von dessen Entwicklung ist mit hohem Aufwand verbunden. Schon kleine Unterschiede zwischen zwei Steuergerätfunktionalitäten erfordern von Anfang an die Entwicklung zweier, dieser Unterschiede Rechnung tragender Steuergeräte.

Es ist des weiteren bekannt, an einen Datenbus ankoppelbare Fahrzeugsteuergeräte mit Umsetzern zur Signalkommunikation über den jeweiligen Datenbus so auszurüsten, daß eine variable Ankopplung eines Steuergerätes an unterschiedliche Datenbustypen möglich ist, siehe beispielsweise die Offenlegungsschriften DE 41 40 803 A1 und DE 42 29 931 A1.

Der Erfindung liegt als technisches Problem die Bereitstellung eines elektronischen Fahrzeugsteuergerätes der eingangs genannten Art zugrunde, bei dem eine Änderung von Protokollen zum Datenaustausch mit anderen Steuergeräten über einen entsprechenden Datenbus noch in einer späten Entwicklungs-Phase oder nach Abschluß der Entwicklung des Steuergerätes mit geringem Aufwand möglich ist.

Die Erfindung löst dieses Problem durch die Bereitstellung eines elektronischen Fahrzeugsteuergerätes mit den Merkmalen des Anspruchs 1. Dieses Steuergerät beinhaltet ein Datenprotokollgerät zwischen Prozessoreinheit und Kommunikationsendstufe, welches das für den Datentransfer jeweils aktuell zu benutzende Datenprotokoll in Abhängigkeit von eingangsseitig zugeführten Protokollsteuerungsinformationen aus einer vorgebbaren Menge verschiedener Datenprotokolle variabel festlegt. Damit ist eine Änderung der Funktionalität dieses universellen Datenprotokollgerätes über zugehörige parametrisierende Steuereingänge desselben noch am Ende der Entwicklung des Steuergerätes möglich, so daß dessen Funktionalitäten nicht schon sämtlich in einer frühen Entwicklungs-Phase festgelegt werden müssen. Zudem können Datenprotokolländerungen, die für eine Variante eines existierenden Steuergerätes erforderlich sind, durch entsprechende Umschaltung oder Umparametrierung der Protokolle am Datenprotokollgerät bewirkt werden, ohne daß deshalb die Steuergerätvariante als eigenes Bauteil eigenständig entwickelt werden muß.

Bei einem nach Anspruch 2 weitergebildeten Fahrzeugsteuergerät beinhaltet das Datenprotokollgerät einen Sendeblock, der so ausgelegt ist, daß er Daten, die von der Prozessoreinheit über eine bestimmte Anzahl von Dateneingabekanälen eingehen, auf eine davon gegebenenfalls verschiedene Anzahl von Datenausgabekanälen umzusetzen vermag, wobei das zugehörige Datenprotokoll unter anderem unter Verwendung einer geeigneten Sende-Multiplexerstufe variabel einstellbar ist. Damit können die von der Prozessoreinheit gegebenenfalls mehrkanalig abgehenden Daten mit einem jeweils gewünschten Protokoll auf eine beliebig vorgegebene Anzahl von Ausgabekanälen umgesetzt und an den Datenbus weitergeleitet werden. Zur Steuerung der Datenübertragung in den nachfolgenden Komponenten gibt die Sende-Multiplexerstufe an einem Steuersignalausgang ein datenprotokollabhängiges Datensendesteuersignal ab.

In weiterer Ausgestaltung enthält der Sendeblock des Datenprotokollgerätes gemäß Anspruch 3 eine Überlastschutzeinheit, der das datenprotokollabhängige Datensendesteuersignal der Sende-Multiplexerstufe zugeführt ist und die dieses gegebenenfalls modifiziert derart weiterleitet, daß die nachfolgende Kommunikationsendstufe vor zu vielen Sendevorgängen geschützt wird.

Bei einem nach Anspruch 4 weitergebildeten elektronischen Fahrzeugsteuergerät beinhaltet das Datenprotokollgerät einen Empfangsblock, der einen zum oben erwähnten Sendeblock äquivalenten Aufbau besitzt, um Daten, die über busseitige Dateneingabekanäle eingehen, mit einem geeigneten Datenprotokoll auf entsprechende prozessorseitige Datenausgabekanäle umzusetzen, wobei eine Empfangs-Multiplexerstufe vorgesehen ist, die unter anderem ein zugehöriges Datenempfangssteuersignal empfängt. Bei zusätzlichem Vorhandensein des erwähnten Sendeblocks arbeitet das universelle Datenprotokollgerät bidirektional.

In weiterer Ausgestaltung beinhaltet das Datenprotokollgerät gemäß Anspruch 5 im Empfangsblock eine Überalterungseinheit, der das Datenempfangssteuersignal zugeführt wird und die anhand dieses Signals festzustellen vermag, wenn keine Daten mehr ankommen, obwohl solche noch erwartet werden. Sie gibt dann ein entsprechendes Informationssignal an die Empfangs-Multiplexerstufe ab.

Bei einem nach Anspruch 6 weitergebildeten Steuergerät beinhalten der Sende- und/oder der Empfangsblock des Datenprotokollgerätes ein sogenanntes History-Register, d.h. eine Schieberegister- oder Puffereinheit, die zur Unterdrückung redundanter Sende- bzw. Empfangsvorgänge dient. Im Sendeblock befindet sich je ein History-Register pro Dateneingabekanal vor der Sende-Multiplexerstufe. Im Empfangsblock ist es pro Datenausgabekanal hinter der Empfangs-Multiplexerstufe angeordnet. In weiterer Ausgestaltung der Erfindung ist dem jeweiligen History-Register gemäß Anspruch 7 eine Bewertereinheit zugeordnet, welche die Menge an Eingangsdaten charakterisiert und beliebig wählbare Bewerter-Funktionen enthält.

Ein nach Anspruch 8 weitergebildetes Datenprotokollgerät beinhaltet einen der jeweiligen Sende- bzw. Empfangs-Multiplexerstufe zugeordneten, sogenannten Multi-Mode-Timer, d.h. einen Mehrbetriebsart-Zeitgeber, der abhängig vom jeweils gewählten Datenprotokoll ein Taktsignal zum zyklischen Senden und/oder Empfangen von Signalen für die Sende- bzw. Empfangs-Multiplexerstufe erzeugt, so daß zyklische Sende- und Empfangsvorgänge möglich sind, ohne ein jeweiliges Sende- bzw. Empfangsabschlußsignal abzuwarten. Ein vorteilhaftes Ausführungsbeispiel der Erfindung ist in den Zeichnungen dargestellt und wird nachfolgend beschrieben. Hierbei zeigen:
- Fig. 1: ein schematisches Blockschaltbild eines elektronischen, busankoppelbaren Fahrzeugsteuergerätes,
- Fig. 2: ein schematisches Blockdiagramm eines im Steuergerät von Fig. 1 vorgesehenen Datenprotokollgerätes,
- Fig. 3: ein detailliertes Blockschaltbild des Datenprotokollgerätes von Fig. 2,
- Fig. 4: ein schematisches Blockdiagramm des Datenprotokollgerätes zur Veranschaulichung der Duplizierbarkeit von Dateneingabekanälen und -ausgabekanälen,
- Fig. 5: ein Blockschaltbild einer im Datenprotokollgerät enthaltenen Bewertereinheit,
- Fig. 6: ein Blockschaltbild einer im Datenprotokollgerät enthaltenen Sende-Multiplexerstufe,
- Fig. 7: ein Blockschaltbild eines im Datenprotokollgerät von Fig. 3 enthaltenen Multi-Mode-Timers,
- Fig. 8: ein Signalverlaufsdiagramm zur Veranschaulichung einer ersten Betriebsart des Multi-Mode-Timers,
- Fig. 9: ein Signalverlaufsdiagramm zur Veranschaulichung einer zweiten Betriebsart des Multi-Mode-Timers,
- Fig. 10: ein Blockschaltbild einer im Datenprotokollgerät enthaltenen Überalterungseinheit,
- Fig. 11: ein Blockschaltbild einer im Datenprotokollgerät enthaltenen Empfangs-Muliplexerstufe und
- Fig. 12: ein Blockschaltbild einer im Datenprotokollgerät enthaltenen Überlastschutzeinheit.

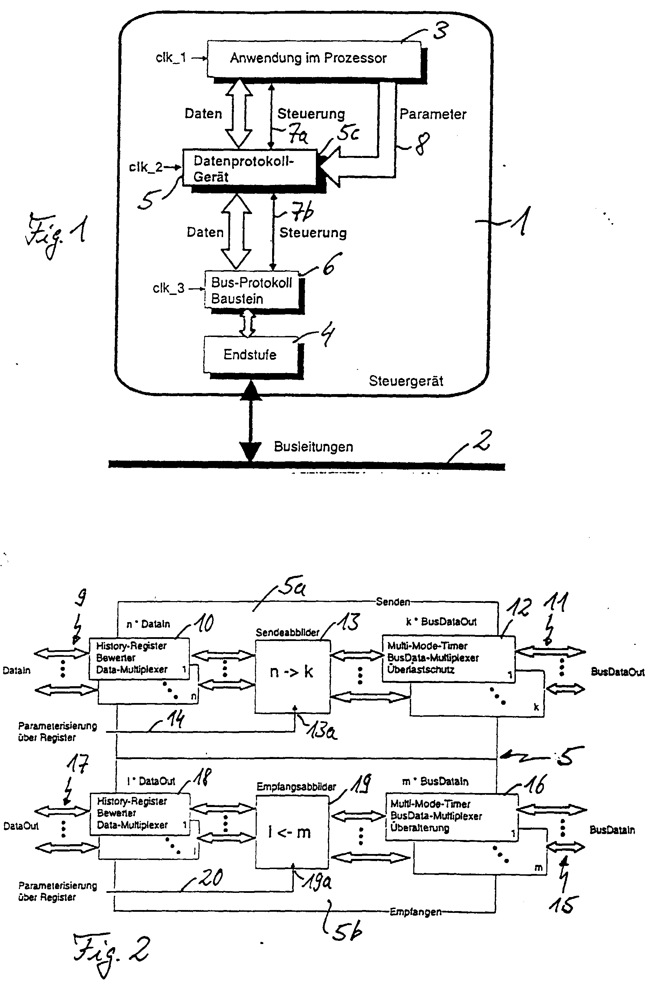

Fig. 1 zeigt stellvertretend eines von mehreren Steuergeräten 1 der fahrzeugelektrischen Anlage eines Kraftfahrzeuges, wie eines Automobils, mit seinen hier interessierenden Komponenten in einem schematischen Blockschaltbild. Die Steuergeräte 1 sind an einen gemeinsamen Datenbus 2, z.B. einen CAN-Bus, angekoppelt und somit über diesen Bus 2 miteinander zwecks Datenaustausch vernetzt. Das Steuergerät 1 beinhaltet als zentrale Einheit einen Mikroprozessor 3 und eine Kommunikationsendstufe 4, die Daten vom Mikroprozessor 3 an den Datenbus 2 weiterleitet und über den Bus 2 eingehende, für das betreffende Steuergerät 1 bestimmte Daten empfängt und an die Prozessoreinheit 3 weiterleitet. Zwischen die Prozessoreinheit 3 und die Endstufe 4 sind seriell ein Datenprotokollgerät 5 und ein Busprotokoll-Baustein 6 geschaltet, die über zugehörige Steuersignale 7a, 7b von der Prozessoreinheit 3 steuerbar sind. Prozessoreinheit 3, Datenprotokollgerät 5 und Busprotokoll-Baustein 6 werden von jeweils zugeführten Taktsignalen clk_1, clk_2, clk_3 getaktet. Der Busprotokoll-Baustein 6 ist von herkömmlichem Aufbau, worauf hier nicht näher eingegangen zu werden braucht. Der Busprotokoll-Baustein 6 und das zwischen ihm und der Prozessoreinheit 3 als erfindungsgemäße Neuerung vorgesehene Datenprotokollgerät 5 sind bidirektional ausgelegt, d.h. erlauben einen bidirektionalen Datenfluß zwischen Prozessoreinheit 3 und Datenbus 2, wie mit entsprechenden Pfeilen angedeutet.

Das Datenprotokollgerät 5 dient dazu, das für jeweils übertragene Daten zu verwendende Protokoll in gewünschter Weise variabel einzustellen, d.h. unter mehreren verfügbaren Datenprotokollen das für den betreffenden Datentyp geeignete auszuwählen. Dazu besitzt es einen Satz von Protokollsteuereingängen 5c, über den entsprechende, das Datenprotokoll festlegende Parameterisierungssignale 8 eingebbar sind, die im vorliegenden Beispiel über die Prozessoreinheit 3 erzeugt werden. Diese Parametrisierbarkeit des Datenprotokollgerätes zwecks Umschaltbarkeit zwischen verschiedenen Datenprotokollen für die zu übertragenden Daten erlaubt es, die Funktionalitäten des Datenprotokollgerätes 5 und damit des Steuergerätes 1 insgesamt nicht schon sämtlich in einer frühen Entwicklungs-Phase festlegen zu müssen. Vielmehr können gewisse Modifikationen noch in einer späten Entwicklungs-Phase oder nach Abschluß der Steuergerätentwicklung bewirkt werden, so daß eine Änderung der Funktionalität keine gesamte Neuentwicklung eines Steuergeräts erfordert. Die über die Steuereingänge 5c durchgeführten Einstellungen bzw. Parametrierungen bleiben auch ohne Spannungsversorgung erhalten. Nachfolgend wird genauer auf den Aufbau und die Funktionen des Datenprotokollgerätes 5 eingegangen, woraus die erwähnten Vorteile und Eigenschaften desselben deutlich werden. Optional sind für das Datenprotokollgerät 5 eigenständige Sende- und Empfangstimer, eine vorgebbare Menge eigenständiger Bewertungsfunktionen, Sende- und Empfangspuffer sowie eine Sendefreigabe, Sendebestätigung und Empfangssignalisierung vorgesehen.

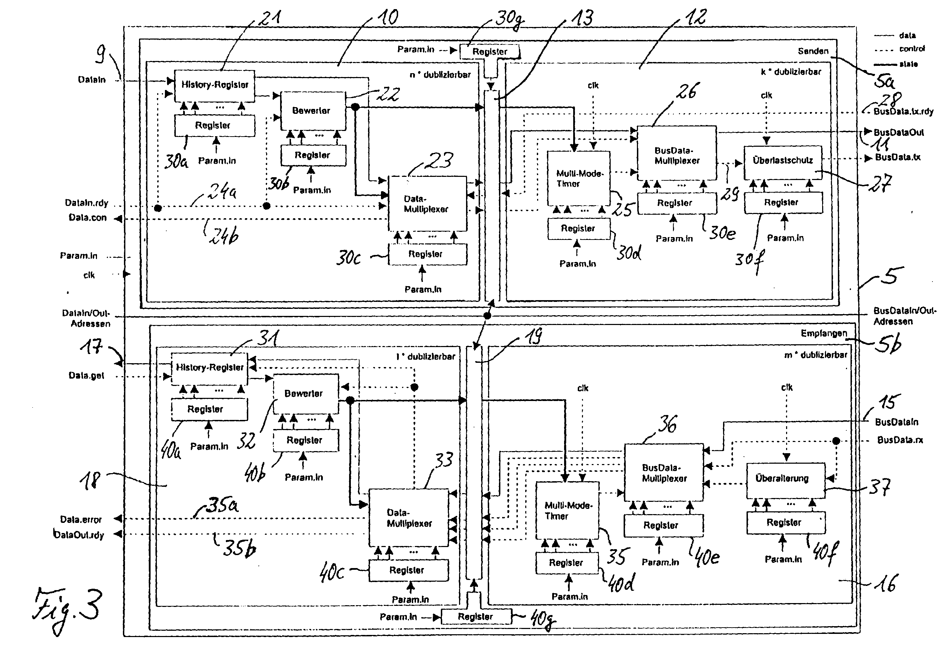

Fig. 2 zeigt schematisch den Grobaufbau des Datenprotokollgerätes 5. Es besteht aus einem Sendeblock 5a und einem Empfangsblock 5b. Der Sendeblock 5a besitzt prozessorseitig, d.h. verbunden mit der Prozessoreinheit 3, eine vorgebbare Anzahl n von Dateneingabekanälen 9 mit je einer zugehörigen Sendeeingangsstufe 10 sowie busseitig, d.h. angeschlossen an den Busprotokoll-Baustein 6, eine vorgebbare Anzahl k von Datenausgabekanälen 11 mit je einer zugehörigen Sendeausgangsstufe 12. Zur Umsetzung der über die n-Eingangskanäle 9 vom Mikroprozessor 3 erhaltenen Daten auf die k-Ausgangskanäle 11 ist ein geeigneter Sendeabbilder 13 an sich bekannter Art zwischen den Eingangsstufen 10 und den Ausgangsstufen 12 vorgesehen. Der Sendeabbilder 13 ist über einen zugehörigen Steuereingang 13a hinsichtlich des jeweils aktuell verwendeten Datenprotokolls durch Eingabe eines zugehörigen Parameterisierungsbefehls 14 parametrisierbar.

Der Empfangsblock 5b besitzt einen dem Sendeblock 5a entsprechenden Aufbau mit einer vorgebbaren Anzahl m busseitiger Dateneingabekanäle 15 mit je einer zugehörigen Empfangseingangsstufe 16, einer vorgebbaren Anzahl 1 von prozessorseitigen Datenausgabekanälen 17 mit je einer zugehörigen Empfangsausgangsstufe 18 und einen zwischenliegenden Empfangsabbilder 19, der hinsichtlich des verwendeten Datenprotokolls über einen Steuereingang 19a durch ein zugeführtes Parameterisierungssignal 20 einstellbar ist. Die prozessorseitigen Endstufen 10, 18 von Sendeblock 5a und Empfangsblock 5b beinhalten als wesentlichste Komponenten ein History-Register, einen Bewerter und einen als Data-Multiplexer bezeichneten Teil einer Sende- bzw. Empfangs-Multiplexerstufe. Die busseitigen Endstufen 12, 16 von Sendeblock 5a und Empfangsblock 5b umfassen vor allem einen weiteren, als BusData-Multiplexer bezeichneten Teil der Multiplexerstufe, einen Multi-Mode-Timer und eine Überlastschutzeinheit bzw. eine Überalterungseinheit, worauf unten näher eingegangen wird.

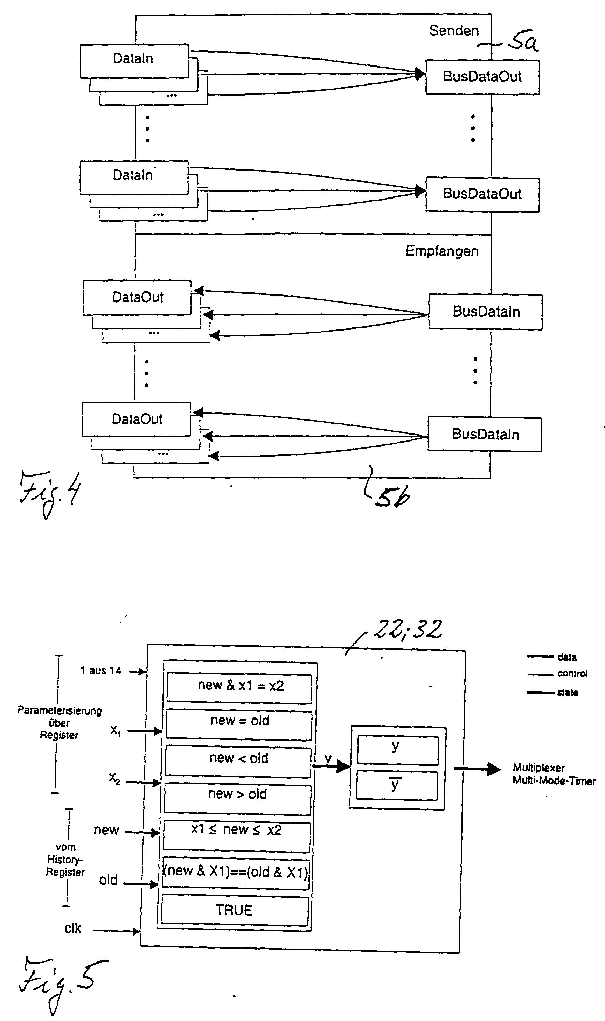

Fig. 3 zeigt in größerem Detail den Aufbau des Sendeblocks 5a und des Empfangsblocks 5b des Datenprotokollgerätes 5 für jeweils einen Dateneingabe- bzw. Datenausgabekanal. Wie daraus ersichtlich, beinhaltet die jeweilige Eingangsstufe 10 des Sendeblocks 5a ein History-Register 21, dem eingangsseitig der zugehörige Dateneingabekanal 9 zugeordnet ist, eine Bewertereinheit 22 zur Bewertung eingehender, vom History-Register 21 übermittelter Daten und einen Data-Multiplexer 23, dem das Ausgangssignal der Bewertereinheit 22 und die vom History-Register 21 weitergeleiteten Daten zugeführt werden. Zwischen dem Data-Multiplexer 23 und der Prozessoreinheit 3 werden datenübertragungssteuernde Signale 24a, 24b ausgetauscht, die angeben, wann ein jeweiliger Datensende- bzw. Datenempfangsvorgang abgeschlossen ist.

Die Ausgangsstufe 12 des Sendeblocks 5a beinhaltet einen Multi-Mode-Timer 25, d.h. einen Mehrbetriebsart-Zeitgeber, einen Bus-Data-Multiplexer 26 und eine Überlastschutzeinheit 27. Dem Multi-Mode-Timer 25 ist ebenso wie anderen getakteten Komponenten des Datenprotokollgerätes 5 ein externes Taktsignal clk zugeführt. Außerdem ist er vom Ausgangssignal des Bewerters 22 und somit in Abhängigkeit vom Inhalt der transferierten Daten steuerbar. Der BusData-Multiplexer 26 gibt ihm vom Data-Multiplexer 23 zugeleitete Daten über den zugehörigen Datenausgabekanal 11 ab, während ein busseitig eingehendes Quittierungssignal 28 über einen abgeschlossenen Datensendevorgang von der Ausgangsstufe 12 zum Data-Multiplexer 23 der Eingangsstufe 10 weitergeleitet wird. Die Überlastschutzeinheit 27 behandelt ein vom BusData-Multiplexer 26 kommendes Datenübertragungs-Sendesteuersignal 29, welches den Abschluß eines jeweiligen Sendevorgangs für die nachfolgenden Komponenten anzeigt, so, daß diese nachfolgenden Komponenten vor zu vielen Sendevorgängen geschützt bleiben. Der BusData-Multiplexer 26 erhält zur Generierung dieses Datenübertragungssteuersignals 29 zugehörige Steuersignale vom Data-Multiplexer 23 und vom Multi-Mode-Timer 25. Der Sendeabbilder 13 sorgt für den richtigen Datentransfer zwischen Sendeeingangsstufe 10 und Sendeausgangsstufe 12. Allen erwähnten Sendeblockkomponenten ist jeweils ein Steuerdatenregister 30a bis 30g zugeordnet, das von einem Parameterisierungs-Steuerdatensatz param.in ansteuerbar ist, womit der Betrieb der betreffenden Komponenten auf ein damit jeweils ausgewähltes Datenprotokoll eingestellt wird.

Die busseitige Eingangsstufe 16 und die prozessorseitige Ausgangsstufe 18 des jeweiligen Empfangsblocks 5b besitzen eine im wesentlichen der busseitigen Ausgangsstufe bzw. der prozessorseitigen Eingangsstufe des Sendeblocks 5a entsprechende Struktur. So beinhaltet seine prozessorseitige Ausgangsstufe 18 ein History-Register 31, einen Bewerter 32 und einen Data-Multiplexer 33, während die busseitige Eingangsstufe einen Multi-Mode-Timer 35, einen BusData-Multiplexer 36 und eine Überalterungseinheit 37 aufweist. Der Empfangsabbilder 19 vermittelt den Datentransfer zwischen busseitiger Eingangsstufe 16 und prozessorseitiger Ausgangsstufe 18 des Empfangsblocks 5b. Allen genannten Einheiten ist wiederum je ein ansteuerbares Register 40a bis 40e zwecks Parameterisierung entsprechend dem jeweils gewünschten Datenprotokoll zugeordnet. Busseitig eingehende Daten BusDataIn gelangen zum Busbata-Multiplexer 36 und von dort über den Empfangsabbilder 19 und den Data-Multiplexer 33 zum ausgangsseitigen History-Register 31, von wo sie über den zugehörigen Datenausgabekanal 17 zur Prozessoreinheit weitergeleitet werden. Der Multi-Mode-Timer 35 steuert in geeigneter Weise den BusData-Multiplexer 36. Er wird seinerseits abhängig vom Dateninhalt des History-Registers 31 gesteuert. Der Data-Multiplexer 33 wird vom Ausgangssignal des Bewerters 32 gesteuert. Ein eingehendes Datenempfangs-Steuersignal BusData.rx ist parallel dem BusData-Multiplexer 36 und der Überalterungseinheit 37 zugeführt. Letztere stellt fest, wenn keine Daten mehr ankommen, obwohl solche noch erwartet werden, und gibt ein entsprechendes Ausgangssignal an den BusData-Multiplexer 36 ab. Der Data-Multiplexer 33 gibt ausgangsseitig Steuersignale 35a, 35b an den Mikroprozessor ab, die über einen eventuellen Übertragungsfehler bzw. den Abschluß eines Datenausgabevorgangs informieren.

Die History-Register 21, 31 dienen zum Aufbau des Vorwissens über die zu übertragenden Daten, verfügen über einen Triggereingang und sind in einer herkömmlichen Weise als getaktete Schieberegister realisierbar. In Verbindung mit dem zugehörigen Bewerter 22, 32 kann die Vorgeschichte für einen aktuellen Datentransfer berücksichtigt werden, um beispielsweise Daten nur dann weiterzuleiten, wenn sie geändert worden sind, wodurch sich redundante Datenübertragungsvorgänge unterdrücken lassen. Optional kann auf diese Funktionalität verzichtet werden. Die den einzelnen Komponenten zugeordneten, parametrisierenden Register 30a bis 30g, 40a bis 40g erlauben die Auswahl vorgegebener Funktionen und eine Initialisierung jeder Komponente bei Inbetriebnahme. Typischerweise bestehen diese Register 30a bis 30g, 40a bis 40g aus ansteuerbaren, nichtflüchtigen Speichern. Im übrigen ist der Fluß an Daten- und Steuersignalen in Fig. 3 selbsterklärend.

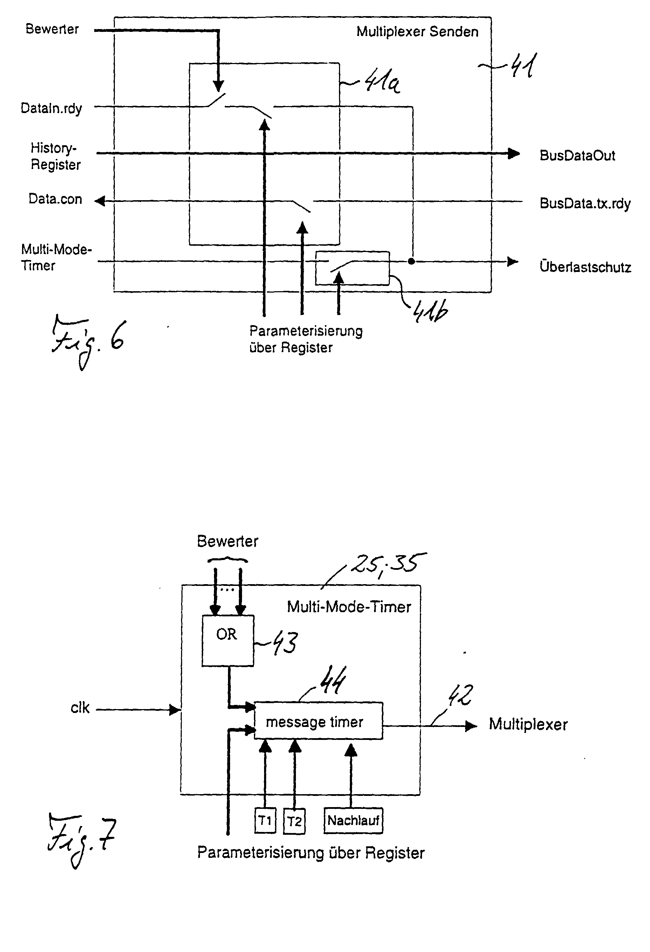

Die Eingangsstufen 10, 16 und Ausgangsstufen 12, 18 des Sendeblocks 5a und des Empfangsblocks 5b sind in jeweils gewünschter Anzahl n, m; k, l entsprechend der Anzahl jeweiliger Dateneingangs- bzw. Datenausgangskanäle 9, 15; 11, 17 duplizierbar. Damit können, wie in Fig. 4 schematisiert dargestellt, eine oder mehrere Abbildungen von über mehrere Eingabekanäle DataIn prozessorseitig zugeführten Daten im Sendeblock 5a auf jeweils einen busseitigen Ausgabekanal BusDataOut und entsprechend im Empfangsblock 5b die über einen jeweiligen busseitigen Eingabekanal BusDataIn vom Datenbus eingehenden Daten auf mehrere prozessorseitige Ausgabekanäle DataOut abgebildet werden.

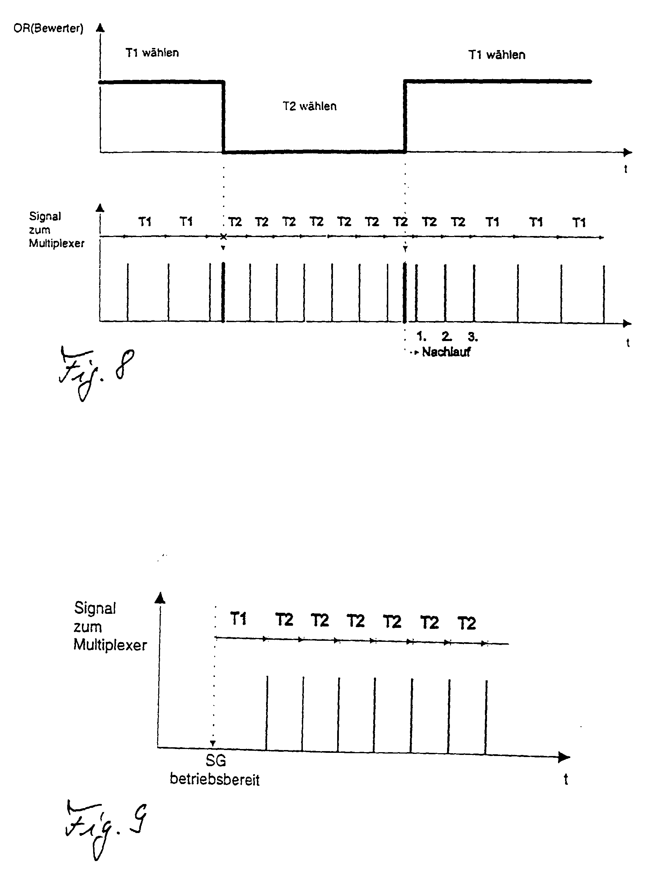

Das wie beschrieben aufgebaute, universelle bidirektionale Datenprotokollgerät 5 erlaubt die Auswahl einer jeweiligen Sende- und Empfangsbetriebsart aus einer Menge vorgegebener Betriebsarten durch den betreffenden Multi-Mode-Timer mit automatischer Initialisierung, wie synchrones Senden und Empfangen oder asynchrones Senden und Empfangen, einen präventiven Kommunikationsüberlastschutz, eine automatische Überalterungsüberwachung, eine Auswahl der Dateninhalts-Bewerterlogik aus einer Menge von durch den Bewerter vorgebbaren Logiken sowie optional eine Empfangssignalisierung und Sendebeauftragung. Nachfolgend wird anhand der Figuren 5 bis 12 auf detailliertere Realisierungen der wesentlichen, neuartigen Komponenten im Datenprotokollgerät 5 eingegangen. Es sei angemerkt, daß selbstverständlich alle Komponenten des Steuergerätes 1 wahlweise in Hardware und/oder Software realisiert sein können.

Fig. 5 zeigt den Aufbau der verwendeten Bewerter 22, 32, wobei die Darstellung im wesentlichen selbsterklärend ist. Über Parameterisierungseingänge wird entsprechend den Ansteuerbefehlen vom zugehörigen datenprotokollparametrisierenden Register die zu verwendende Bewerterlogik eingestellt. Dementsprechend werden neu eingehende Daten "new" mit zuvor eingehenden Daten "old" des zugehörigen History-Registers auf Übereinstimmung verglichen und ein entsprechendes Zustandssignal y erzeugt und an die Multiplexerstufe sowie den Multi-Mode-Timer weitergeleitet.

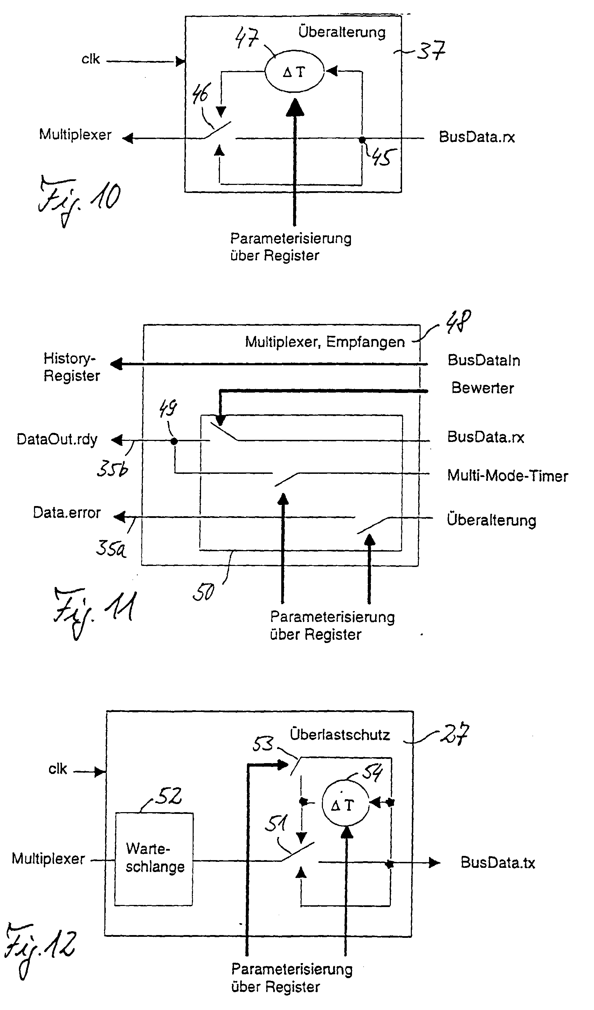

Fig. 6 zeigt die sich aus dem Data-Multiplexer 23 und dem BusData-Multiplexer 26 einer jeweiligen Eingangs- und Ausgangsstufe 10, 12 des Sendeblocks 5a zusammensetzenden Sende-Multiplexerstufe 41. Diese beinhaltet in gezeigter Weise mehrere ansteuerbare Schaltelemente, die vom Datenzustands-Ausgangssignal des Bewerters bzw. von den datenprotokolleinstellenden Parameterisierungsbefehlen des zugehörigen Parameterisierungsregisters leitend bzw. sperrend geschaltet werden können. Je nach Stellung dieser Schaltelemente wird zum einen das busseitig zugeführte Sendeabschlußsignal BusData.tx.rdy als entsprechendes Datensteuersignal Data.con zur Prozessoreinheit durchgelassen oder nicht und zum anderen das geeignete Busdatensendesteuersignal aus dem zugeführten Signal des Multi-Mode-Timers bzw. dem Dateneingabeabschlußsignal DataIn.rdy erzeugt und an die Überlastschutzeinheit weitergeleitet. Dabei ist im gezeigten Sende-Multiplexer 41 auch der Abbildungsmechanismus des Sendeabbilders enthalten. Die Sende-Multiplexerstufe 41 steuert die Datenflüsse und Steuersignalflüsse einschließlich der als solcher bekannten und daher hier nicht näher ausgeführten Adressierung. Die Multiplexerstufe 41 ist in der gezeigten Auslegung in der Lage, zwischen synchronem und asynchronem Senden umzuschalten. Der eine eingerahmte Multiplexerteil 41a ist pro prozessorseitigem und pro busseitigem Datenkanal zu duplizieren, während der andere eingerahmte Multiplexerteil 41b pro busseitigem Datenkanal zu duplizieren ist.

Fig. 7 veranschaulicht die Struktur der Multi-Mode-Timer 25, 35. Diese Mehrbetriebsart-Zeitgebereinheit erzeugt mindestens ein Triggersignal 42 für die zugehörige Multiplexerstufe und verfügt über einen als Zeitbasis benutzten Takteingang clk, alternativ über eine interne Zeitbasis. Der Multi-Mode-Timer 25, 35 für einen jeweiligen busseitigen Datenkanal empfängt an einem ODER-Gatter 43 die Zustands-Ausgangssignale der Bewertereinheiten der verschiedenen prozessorseitigen Datenkanäle. Das Ausgangssignal des ODER-Gatters 43 ist einem Nachrichten-Zeitgeber 44 zugeführt, der parallel dazu datenprotokollabhängige Parameterisierungsbefehle vom zugehörigen Datanprotokoll-Parameterisierungsregister empfängt. Der Multi-Mode-Timer 25, 35 verfügt über zwei Betriebsarten mit zwei verschiedenen Zykluszeiten T1, T2, die als Parameter wählbar sind. Des weiteren kann ein Nachlauf parameterisiert werden. Alternativ sind mehr als zwei Betriebsarten im Multi-Mode-Timer implementierbar, wobei er typischerweise umschaltbare zyklische Zeitgeber beinhaltet.

In den Figuren 8 und 9 sind die beiden Betriebsarten des Multi-Mode-Timers 25, 35 in Diagrammform veranschaulicht. Fig. 8 zeigt eine erste Betriebsart, die einen zyklischen Botschafts-Timer mit Nachlauf darstellt, wobei die beiden typischen Zeitparameter T1 und T2 beide größer null gewählt sind. Die Auswahl zwischen den beiden Zeitparametern T1 und T2 als jeweils maßgebliche Zykluszeit erfolgt mittels des Ausgangssignals des ODER-Gatters 43. Das obere der beiden zeitgleich übereinander liegenden Diagramme von Fig. 8 gibt das Ausgangssignal des ODER-Gatters 43 wieder, während das untere Diagramm das der Multiplexer zugeführte Triggersignal 42 darstellt. Wenn das Ausgangssignal des ODER-Gatters 43 auf seinen zum Zeitparameter T1 gehörigen Pegel wechselt, behält das Triggersignal den vorherigen Takt T2 noch für den gewählten Nachlaufwiederholfaktor von z.B. drei bei, um dann auf den neuen Takt T1 zu wechseln.

Bei der in Fig. 9 dargestellten Betriebsart handelt es sich um einen zyklischen Botschaft-Timer ohne Nachlauf, bei dem wiederum zwischen zwei Zeitparametern T1 und T2 ausgewählt werden kann. Der Parameter T1 legt fest, mit welcher Verzögerung das zyklische Senden einer Botschaft beginnt, das dann mit der Zykluszeit T2 erfolgt. Hingegen wechselt das Triggersignal 42 verzögerungsfrei vom Zyklustakt T1 zum Zyklustakt T2, wenn das Ausgangssignal des ODER-Gatters 43 auf den zum Zeitparameter T2 gehörigen Pegel wechselt.

Fig. 10 zeigt die Struktur der jeweiligen Überalterungeinheit 37 in selbsterklärender Weise, wobei, wie auch in den übrigen Figuren, die dünnen Linien Steuersignale und die dicken Linien Daten- bzw. Zustandssignale repräsentieren. Die Überalterungseinheit 37 beinhaltet einen Verzweigungsknoten 45, der als Treiber zu verstehen ist, sowie einen Umschalter 46, der als logisches Gatterwerk zu verstehen ist. Eine schemtisch gezeigte Zeitverzögerungseinheit 47 ist typischerweise durch ein Schieberegister oder einen Zähler realisiert und über die datanprotokollabhängigen Parameterisierungssignale des zugehörigen Parameterisierungsregisters einstellbar. Der zugehörigen Multiplexerstufe wird das jeweils vom Umschalter 46 ausgewählte Ausgangssignal der Überalterungseinheit 37 zugeführt. Die so aufgebaute Überalterungseinheit 37 zeigt an, wenn Daten zu lange nicht aktualisiert wurden, d.h. sie überwacht zeitlich die Datenempfangsvorgänge.

Fig. 11 zeigt die Struktur einer den Daten-Multiplexer 33 und den BusData-Multiplexer 36 samt zugehörigem Empfangsabbilder 19 zusammenfassenden Empfangs-Multiplexerstufe 48 des Empfangsblocks 5b. Die Struktur dieses Empfangs-Multiplexers 48 ist weitgehend analog zu derjenigen des Sende-Multiplexers 41 von Fig. 6, so daß auf die dortige Beschreibung verwiesen werden kann. Der gezeigte Verbindungspunkt 49 stellt dabei ein logisches ODER-Gatter dar, während die ansteuerbaren Schaltelemente typischerweise als logische UND-Gatter implementiert sind. Die Empfangs-Multiplexerstufe 48 ist in der Lage, zwischen synchronem und asynchronem Empfangen umzuschalten. Bei entsprechender Parameterisierung leitet die Empfangs-Multiplexerstufe 48 im Unterschied zur Funktion der Sende-Multiplexerstufe 41 das ggf. einen Übertragungsfehler anzeigende Ausgangssignal der Überalterungseinheit als Fehlersignal an die Prozessoreinheit weiter. Der eingerahmte Multiplexerteil 50 ist pro prozessorseitigem und pro busseitigem Datenkanal zu duplizieren. Der Empfangs-Multiplexer 48 zerlegt die eingangsseitig ankommenden Daten Bus-DataIn in verschiedene Teile und schickt sie zu den richtigen History-Registern.

Fig. 12 zeigt die Struktur der Überlastschutzeinheit 27. Dabei stellen Knotenpunkte wiederum Treibereinheiten dar, während ein dargestelltes Schaltelement 51 als logisches UND-Gatter zu verstehen ist. Eine eingangsseitige Warteschlangeneinheit 52, der das zugehörige Multiplexer-Ausgangssignal zugeführt ist, ist z.B. von einem FIFO-Speicher gebildet. Über die datenprotokollfestlegenden Parameterisierungsbefehle vom zugehörigen Parameterisierungsregister können ein weiteres Schaltelement 53 sowie ein Zeitverzögerungsglied 54 angesteuert werden, um die richtigen Zeitabstände für zu sendende Daten einzustellen und dadurch das entsprechende Sendesteuersignal BusData.tx zu bilden.

Das erfindungsgemäß zu verwendende Datenprotokollgerät kann mit seinen zugehörigen Einheiten als ASIC, IC oder einer anderen Logikschaltung in Hardware oder Software diskret oder in integrierter Form implementiert sein. Je nach Anwendungsfall können beim gezeigten Ausführungsbeispiel einzelne Schnittstellen oder Module des gezeigten Datanprotokollgerätes entfallen. Das erfindungsgemäß mit einem derartigen Datenprotokollgerät ausgerüstete Fahrzeugsteuergerät ist hinsichtlich unterschiedlicher auftretender Datentypen in der Fahrzeugelektronik flexibel verwendbar, wobei die Protokollfestlegung noch nach Abschluß der Steuergerätentwicklung möglich bleibt. Gegenüber der herkömmlichen Technik läßt sich daher die Bereitstellung verschiedener, nur wenig modifizierter Steuergerätevarianten vermeiden, was zu Vorteilen hinsichtlich Logistik und Ersatzteillagerung führt. Außerdem sind Steuergeräte für Prototypen-Fahrzeuge und für einen Laboraufbau mit geringem Aufwand generierbar, da die Datenprotokolle sehr leicht ausgewählt und parameterisiert werden können. Die Steuergeräte sind am Band-Ende bei der Produktion leicht an spezifische Zielfahrzeuge anpaßbar, so daß beispielsweise dasselbe Steuergerät für unterschiedliche Fahrzeugmodelle verwendbar ist. Durch die Festlegung der Datenprotokolle erst gegen Ende der Steuergerätentwicklung können Komponentenzulieferer von Protokollanpassungsmaßnahmen entlastet werden. Durch das von außen manipulierbare Steuergeräteverhalten sind optimierte Prüfungen durchführbar, wodurch auch eine Unterstützung bei der Fehleranalyse im Bereich der Freigabeuntersuchung und der Wareneingangsprüfung möglich ist.

## Patentansprüche

1. Elektronisches Fahrzeugsteuergerät mit
- einer Prozessoreinheit (3) und
- einer Kommunikationsendstufe (4), über die das Steuergerät an einen Datenbus (2) ankoppelbar ist,
**gekennzeichnet durch**
- ein zwischen die Prozessoreinheit (3) und die Kommunikationsendstufe (4) geschaltetes, ansteuerbares Datenprotokollgerät (5), welches das für den jeweiligen Datentransfer zu benutzende Datenprotokoll in Abhängigkeit von eingangsseitig zugeführten Protokollsteuerungsinformationen variabel festlegt.

2. Elektronisches Fahrzeugsteuergerät nach Anspruch 1, weiter
**dadurch gekennzeichnet, daß**
das Datenprotokollgerät (5) einen Sendeblock (5a) mit einer vorgebbaren Anzahl (n) von prozessorseitigen Dateneingabekanälen (9), einer vorgebbaren Anzahl (k) von busseitigen Datenausgabekanälen (11) und Mitteln (13) zur Umsetzung von Daten von den Eingabekanälen auf die Ausgabekanäle enthält, die eine SendeMultiplexerstufe (23, 26) umfassen, welche wenigstens ein datenprotokollabhängiges Datensendesteuersignal (29) abgibt.

3. Elektronisches Fahrzeugsteuergerät nach Anspruch 2, weiter
**gekennzeichnet durch**
eine Überlastschutzeinheit (27), die das Datensendesteuersignal (29) hinsichtlich Verhinderung von zu vielen Sendevorgängen behandelt.

4. Elektronisches Fahrzeugsteuergerät nach einem der Ansprüche 1 bis 3, weiter
**dadurch gekennzeichnet, daß**
das Datenprotokollgerät (5) einen Empfangsblock (5b) mit einer vorgebbaren Anzahl (m) von busseitigen Dateneingabekanälen (15), einer vorgebbaren Anzahl (1) von prozessorseitigen Datenausgabekanälen (17) und Mitteln zur Umsetzung von Daten von den Eingabekanälen auf die Ausgabekanäle enthält, die eine Empfangs-Multiplexerstufe (33, 36) umfassen, welche wenigstens ein datenprotokollabhängiges Datenübertragungssteuersignal (35b) abgibt.

5. Elektronisches Fahrzeugsteuergerät nach Anspruch 4, weiter
**gekennzeichnet durch**
eine Überalterungseinheit (37) zur zeitlichen Überwachung von Datenempfangsvorgängen anhand eines busseitig zugeführten Datenempfangssteuersignals.

6. Elektronisches Fahrzeugsteuergerät nach einem der Ansprüche 2 bis 5, weiter
**dadurch gekennzeichnet, daß**
der Sendeblock (5a) und/oder der Empfangsblock (5b) pro prozessorseitigem Datenkanal (9, 17) eine datenpuffernde Registereinheit (21, 31) aufweisen.

7. Elektronisches Fahrzeugsteuergerät nach Anspruch 6, weiter
**dadurch gekennzeichnet, daß**
der Sendeblock (5a) und/oder der Empfangsblock (5b) eine der jeweiligen Registereinheit (21, 31) nachgeschaltete Bewertereinheit (22, 32) zur Datenzustandsbewertung enthalten, dessen Ausgangssignal der Multiplexerstufe (23, 26; 33, 36) zugeführt wird.

8. Elektronisches Fahrzeugsteuergerät nach einem der Ansprüche 2 bis 7, weiter
**dadurch gekennzeichnet, daß**
der Sendeblock (5a) und/oder der Empfangsblock (5b) pro busseitigem Datenkanal (11, 15) einen Mehrbetriebsart-Zeitgeber (25, 35) enthält, der ein betriebsartspezifisches Taktsignal für die zugehörige Multiplexerstufe (23, 26; 33, 36) erzeugt.
